# EUROPÄISCHE PATENTSCHRIFT

(11) **EP 2 712 042 B1**
(45) Veröffentlichungstag und Bekanntmachung des Hinweises auf die Patenterteilung: **06.05.2015**
(21) Anmeldenummer: 12306148.3
(22) Anmeldetag: 24.09.2012
(51) Int. Cl.: H02G 3/22, H02G 3/08

(54) **Wasserdichter Verbinder für elektrische Leiter**
Waterproof connector for electric conductors
Connexion étanche pour conducteurs électriques

(43) Veröffentlichungstag der Anmeldung: 26.03.2014
(73) Patentinhaber: Nexans, 75008 Paris (FR)
(72) Erfinder: Nachbauer, Otto, 92685 Floss (DE); Schröer, Frank, 92637 Weiden (DE)
(74) Vertreter: Döring, Roger

(56) Entgegenhaltungen:
- EP-A1- 1 363 376
- GB-A- 741 391
- US-A- 3 710 003
- US-A- 5 055 636
- US-A- 5 589 666

## Beschreibung

Die Erfindung bezieht sich auf eine Vorrichtung zum wasserdichten Abdecken der Endbereiche von mindestens zwei isolierten elektrischen Leitern gemäß dem Oberbegriff des Patentanspruchs 1.

Eine solche Vorrichtung geht beispielsweise aus US 3,710,003 A und US 5,589,666 A hervor.

Es ist bekannt, elektrisch leitend miteinander verbundene abisolierte Enden von Leitern dadurch mit einer Isolierung zu umgeben, daß die miteinander verbundenen abisolierten Leiterenden in einem Schrumpfschlauch angeordnet werden, der auf seiner Innenseite eine Beschichtung aus Heißkleber aufweist. Zur Erzeugung einer wasserdichten Isolierung wird der Schrumpfschlauch erwärmt, so daß sich auch der Heißkleber verflüssigt und an den Leitern anliegt. Bei dieser Isolierung ist nachteilig, daß eine wasserdichte Isolierung nur dann erreicht wird, wenn der Heißkleber bei der Erwärmung des Schrumpfschlauchs auch zwischen die Leiter fließt und deren Zwischenräume ausfüllt.

In der US 2008/0115955 A1 ist ein Wandelement mit einer flexiblen Abdeckung für die Durchführung von Nachrichtenkabeln beschrieben. In der Abdeckung sind Durchlässe angebracht, die durch sternförmig verlaufende Schnitte erzeugt sind. Die dadurch keilförmig gestalteten Teile der Abdeckung liegen an einem durch einen solchen Durchlaß hindurchgeführten Nachrichtenkabel an.

Aus der eingangs erwähnten US 5,589,666 A oder US 3,710,003 A geht eine Vorrichtung zum feuchtigkeitsdichten Einbetten der abisolierten Enden von zwei elektrischen Leitern hervor, die aus einer topfartigen Kappe und einer Dichtungsplatte sowie weiteren Elementen besteht, wobei die Dichtungsplatte im Montagezustand eine Öffnung der Kappe verschließt. Die Dichtungsplatte hat mindestens zwei Durchbrechungen, die in radialer Richtung nach außen offen sind, so daß zwei Leiter von der Seite her in radialer Richtung inje eine Durchbrechung eingeführt werden können. Die Durchbrechungen werden nach dem Einführen der Leiter mittels einer Dichtungsmasse abgedichtet. Die Kappe hat neben der durch die Dichtungsplatte zu verschließenden Öffnung eine weitere Öffnung mit Ventil, durch welche Luft bzw. Masse austreten kann, die im Montagezustand den von der Kappe umschlossenen Hohlraum vollständig ausfüllt.

Die Aufgabe der Erfindung liegt in der Bereitstellung einer alternativen Vorrichtung zur wasserdichten Isolierung miteinander elektrisch leitend verbundener abisolierter Leiterenden, sowie in der Bereitstellung eines Verfahrens zur Herstellung einer solchen Vorrichtung.

Diese Aufgabe wird entsprechend den kennzeichnenden Merkmalen der Patentansprüche 1 und 5 gelöst.

Die elektrisch miteinander verbundenen abisolierten Leiterabschnitte sind auf einer gemeinsamen Seite der Dichtungsplatte angeordnet, so daß die abisolierten Leiterabschnitte vollständig von der Kappe und der Dichtungsplatte umfaßt sind, welche den Innenquerschnitt der Kappe wasserdicht verschließt, der die eine Öffnung der Kappe aufspannt. Generell werden die abisolierten Leiterabschnitte auch als Leiterenden bezeichnet. Diese Vorrichtung ist insbesondere zur Verwendung mit Leitern geeignet, deren Isolierung keine stoffschlüssige Verbindung mit Heißkleber eingeht, z. B. für strahlenvernetzte Isolierungen. Denn die Anordnung von Leitern in Durchbrechungen der Dichtungsplatte bildet unabhängig von der chemischen Beschaffenheit eine physikalische Dichtung, während es z. B. bei Schrumpfschläuchen mit Heißkleber nachteilig ist, wenn die Isolierung nicht mit dem Kleber reagiert und bei Bewegung die Bildung eines Spalts zuläßt.

Die Kappe umfaßt die miteinander verbundenen Leiterabschnitte und weist genau eine Öffnung auf, die z. B. gleich groß wie der Innenquerschnitt der Kappe oder kleiner oder größer als der Innenquerschnitt derselben ist. Die Dichtungsplatte verschließt den Innenquerschnitt der Kappe, die durch die eine Öffnung der Kappe zugänglich ist, wobei die Leiter jeweils einzeln wasserdicht durch Durchbrechungen der Dichtungsplatte geführt sind und die abisolierten, elektrisch miteinander verbundenen Leiterabschnitte auf der Seite der Dichtungsplatte angeordnet sind, die der Innenseite bzw. dem Innenraum der Kappe zugewandt ist.

Die abisolierten Leiterabschnitte können auf der einen Seite der Dichtungsplatte z. B. mittels einer Lötung bzw. Schweißung oder durch eine Quetschhülse miteinander verbunden sein. Die an die abisolierten Leiterabschnitte angrenzenden Abschnitte der Leiter weisen eine umfängliche Isolierung auf, wie sie beispielsweise von Adern elektrischer Kabel bekannt ist, und sind wasserdicht durch die Durchbrechungen der Dichtungsplatte geführt. Die Leiter können dadurch wasserdicht in den Durchbrechungen der Dichtungsplatte angeordnet sein, so daß sie entlang ihres Umfangs kraft- und/oder formschlüssig in den Durchbrechungen angeordnet sind.

Da die Durchbrechungen der Dichtungsplatte voneinander beabstandet sind und jeweils ein Leiter in einer Durchbrechung angeordnet ist, ist bei der Vorrichtung auch eine wasserdichte Isolierung im Zwischenraum zwischen benachbarten Leitern hergestellt. Bevorzugt haben die Durchbrechungen einen runden Querschnitt, um an runde Leiter angepaßt zu sein.

Jede Durchbrechung weist eine Lamelle auf, die den Querschnitt der Durchbrechung verringert und elastisch umfänglich in einem durch die Durchbrechung angeordneten Leiter anliegt. Die Lamelle wird mittels eines Leiters geöffnet bzw. durchstochen, so daß eine Durchbrechung nur dann geöffnet ist, wenn ein Leiter durch die Durchbrechung hindurch angeordnet ist. Eine die Durchbrechung verschließende Lamelle, die durch einen in der Durchbrechung angeordneten Leiter durchstochen ist, ist bevorzugt einstückig mit der Dichtplatte ausgebildet. Eine Dichtplatte mit einer in zumindest einer Durchbrechung angeordneten Lamelle besteht z. B. aus Silikon, da eine Lamelle aus diesem Material ohne weiteres mit einer Ader durchstechbar ist.

Zusätzlich zu der Lamelle kann eine Durchbrechung auf ihrer inneren Oberfläche umfängliche Rippen und Nuten aufweisen, wobei die Rippen vollumfänglich elastisch kraftschlüssig gegen einen in der Durchbrechung angeordneten Leiter anliegen.

Bevorzugt weist die Dichtungsplatte eine Anzahl Durchbrechungen auf, die gleich der Anzahl der Leiter bzw. gleich der Anzahl elektrisch leitend miteinander verbundener Leiterabschnitte ist.

Lamellen und durch Nuten getrennte vorstehende Rippen, die vorzugsweise jeweils umlaufend ausgebildet bzw. umfänglich geschlossen sind, können bei mehrschichtigen Dichtungsplatten an jeder Schicht angeordnet sein. Sie sind insbesondere an der Schicht hoher Elastizität angeordnet. Vorzugsweise sind Lamellen und/oder Nuten einstückig mit der Dichtungsplatte ausgebildet.

Die Dichtungsplatte liegt vollumfänglich kraft- und/oder formschlüssig an der Kappe an und weist vorzugsweise an ihrer Umfangsfläche, die die Kappe kontaktiert, von Nuten beabstandete umlaufende Rippen bzw. Vorsprünge auf, die eine Dichtung gegen die Kappe bilden. Die Rippen und Nuten der Umfangsfläche liegen gegen die vorzugsweise zylindrische Innenwand der Kappe an und bilden eine zylindrische Umfangsfläche aus, die von umlaufenden Nuten unterbrochen sein kann.

Die Vorrichtung nach der Erfindung wird nun genauer anhand der Zeichnungen beschrieben, in welchen dieselbe schematisch dargestellt ist.

Es zeigen:
Fig. 1 eine Dichtungsplatte mit darin angeordneten, abschnittsweise elektrisch verbundenen Leitern,
Fig. 2 eine erfindungsgemäße Vorrichtung,
Fig. 3 einen teilweisen Querschnitt durch eine bevorzugte Ausführungsform einer erfindungsgemäßen Vorrichtung,
Fig. 4 einen teilweisen Querschnitt durch einen an ihre Öffnung angrenzenden Abschnitt einer Kappe der Vorrichtung,
Fig. 5 einen teilweisen Querschnitt durch eine bevorzugte Ausführungsform einer erfindungsgemäßen Vorrichtung,
Fig. 6 eine Ausführungsform in Aufsicht auf die Dichtungsplatte mit Schnitt durch die Kappe,
Fig. 7 eine Ausführungsform im Schnitt.

In den einzelnen Figuren bezeichnen gleiche Bezugsziffern funktionsgleiche Elemente.

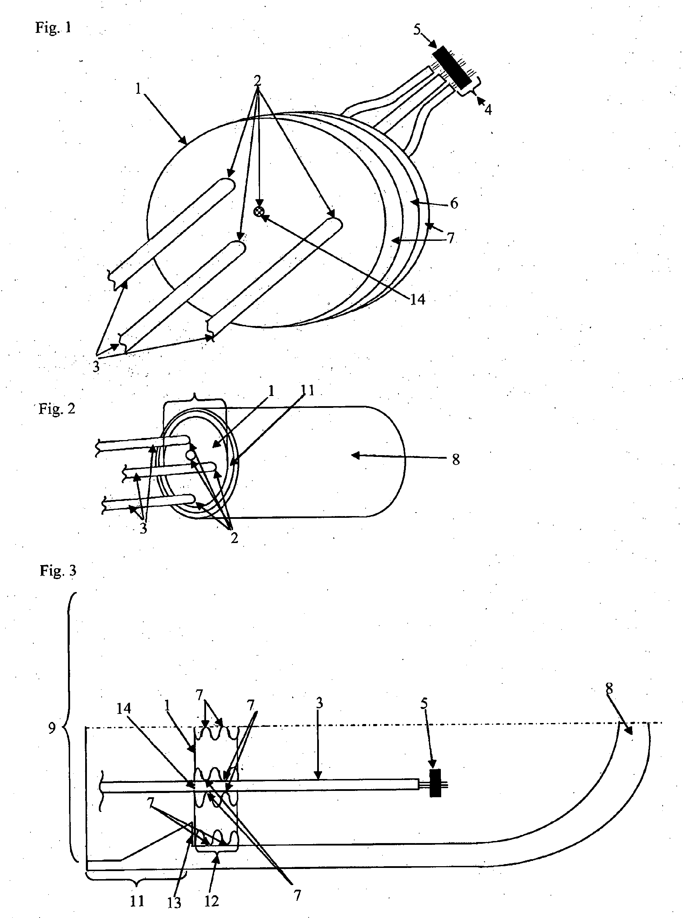

Fig. 1 zeigt eine Dichtungsplatte 1 mit Durchbrechungen 2 in Form von Bohrungen. Jeder Leiter 3 ist in einer individuellen Durchbrechung 2 angeordnet, so daß seine Isolierung wasserdicht von der Durchbrechung 2 umfaßt ist. Diejenige der Durchbrechungen 2, in welcher kein Leiter 3 angeordnet ist, ist von einer Lamelle 14 überdeckt. Die endständigen Abschnitte 4 der Leiter 3 sind abisoliert und mittels einer Quetschhülse 5 miteinander elektrisch leitend verbunden.

Die Dichtungsplatte 1 weist durch eine Nut 6 beabstandete umlaufende Rippen 7 auf der Oberfläche auf, die gegen einen Oberflächenbereich der Kappe 8 angeordnet wird.

Fig. 2 zeigt eine zylindrische Kappe 8 mit genau einer Öffnung 9, die von der Stirnseite der Dichtungsplatte 1 aufgespannt wird. Die Dichtungsplatte 1 ist um einem Abschnitt 11 der Kappe 8 von der Öffnung 9 beabstandet. Die Dichtungsplatte 1 liegt mit ihrer Umfangsfläche formschlüssig an der Innenoberfläche der Kappe 8 an und überdeckt die Öffnung 9 bzw. verschließt das Innenvolumen der Kappe 8, in welchem die abisolierten Abschnitte 4 der Leiter 3 angeordnet sind.

Fig. 3 zeigt ausschnittsweise einen Querschnitt durch die Kappe 8 mit einem Bereich 12, in dem die Dichtungsplatte 1 angeordnet ist. Der Bereich 12 bzw. die darin angeordnete Dichtungsplatte 1 ist um einen Abschnitt 11 von der Öffnung 9 der Kappe beabstandet. Der Abschnitt 11 weist angrenzend an die Öffnung 9 einen Innenquerschnitt auf, der größer als der Außenquerschnitt der Dichtungsplatte 1 ist. Er verjüngt sich trichterförmig bis angrenzend an den Bereich 12 bis auf einen Innenquerschnitt, der kleiner ist als der Außenquerschnitt der Dichtungsplatte 1. Da der Bereich 12 einen Innenquerschnitt aufweist, der dem Außenquerschnitt der Dichtungsplatte 1 entspricht, vorzugsweise mit kraftschlüssiger Passung, bildet der Abschnitt 11 einen Anschlag 13, der die Dichtungsplatte 1 im Innenquerschnitt der Kappe 8 hält.

Die Dichtungsplatte 1 weist Lamellen 14 auf, die den Innenquerschnitt der Durchbrechungen 2 elastisch verringern und um den vollständigen Umfang gegen einen Leiter 3 anliegen. Eine Lamelle 14 ist durch den in der Durchbrechung 2 angeordneten Leiter 3 durchstochen und entsprechend gestrichelt dargestellt.

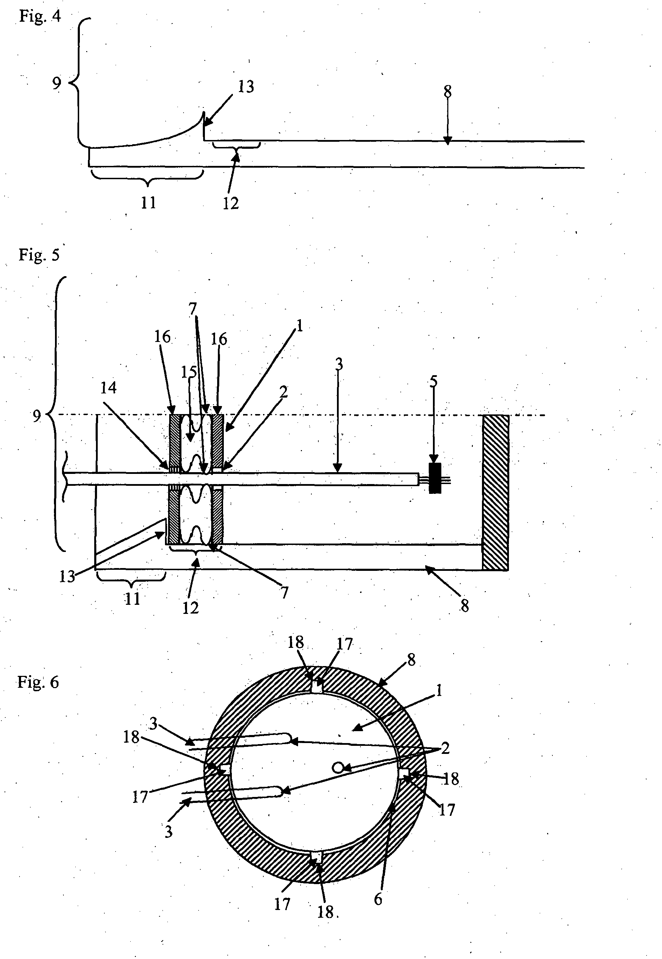

Fig. 4 zeigt ausschnittsweise eine bevorzugte Ausführungsform des Querschnitts der Kappe 8 in ihrem Abschnitt 11, der sich zwischen der Öffnung 9 und dem Anschlag 13 erstreckt, an welchen wiederum der Bereich 12 angrenzt, gegen den die Dichtungsplatte 1 anliegt. In dieser Ausführungsform verjüngt sich der Innenquerschnitt des Abschnitts 11 von der Öffnung 9 zum Anschlag 13 mit bogenförmigem oder parabelförmigem Profil. Diese Ausführungsform des Abschnitts 11 kann die Anordnung der Dichtungsplatte 1 durch die Öffnung 9 der Kappe 8 bis hinter den Anschlag 13, vorzugsweise etwa senkrecht zur Längsachse der Kappe 8, erleichtern. Die Verjüngung kann sich über den gesamten Querschnitt erstrecken und eine kontinuierliche Innenoberfläche bilden, oder in einem radialen Abschnitt der Kappe 8 gebildet sein und z. B. einen oder mehrere streifenförmige Keilansätze auf der Innenoberfläche der Kappe 8 bilden.

Fig. 5 zeigt eine weitere bevorzugte Ausführungsform der Kappe 8 mit einem sich von der Öffnung 9 bis zu dem Anschlag 13 trichterförmig verjüngenden Abschnitt 11 und einer gegen den Anschlag 13 angeordneten Dichtungsplatte 1.

Die in Fig. 5 gezeigte Dichtungsplatte 1 weist drei Schichten auf, vorzugsweise eine mittlere Schicht 15 aus einem Kunststoff höherer Elastizität und beidseitig zur mittleren Schicht 15 angeordnete Außenschichten 16, die vorzugsweise eine höhere Steifheit bzw. geringere Elastizität aufweisen. Die Durchbrechungen 1 erstrecken sich durch die drei Schichten 15,16 der Dichtungsplatte 1. Die Lamellen 14 können sowohl in der mittleren Schicht 15 angeordnet sein, als auch in einer oder beiden Außenschichten 16. In dieser Ausführungsform kann zusätzlich eine Lamelle zwischen einer der Außenschichten 16 und der mittleren Schicht 15 angeordnet sein, oder eine der Außenschichten 16 kann eine Lamelle 14 sein, z. B. eine Metallfolie, um eine leicht mittels des Leiters 3 durchstechbare Lamelle 14 zu bilden, und überdies eine feuchtigkeitsdichte Lamelle 14 über einer nicht mit einem Leiter 3 versehenen Durchbrechung zu bilden.

Die Fig. 6 zeigt in Aufsicht auf die Dichtungsplatte 1, die im Innenquerschnitt der Kappe 8 derart angeordnet ist, daß eine zumindest einseitige Verrastung der Dichtungsplatte 1 mittels Ansätzen 17 erfolgen kann, die in Rastausnehmungen 18 der Kappe 8 angeordnet sind. In Fig. 6 ist die Kappe 8 etwa in der Ebene geschnitten, in der die Rastausnehmungen 18 gebildet sind. Die Rastausnehmungen 18 sind zum Innenquerschnitt der Kappe 8 offen. In dieser Ausführungsform weist die Dichtungsplatte 1 vorzugsweise eine Außenschicht 16 aus einem Kunststoff geringer Elastizität auf, auf dem die radial symmetrisch angeordneten Ansätze 17 einstückig geformt sind, und die auf der Außenschicht 16 aufliegende mittlere Schicht 15 hoher Elastizität. Optional weist die Dichtungsplatte 1 dieser Ausführungsform eine gegenüber der Außenschicht 16, an der die Ansätze 17 geformt sind, und an der mittleren Schicht 15 hoher Elastizität anliegende weitere Außenschicht 16 auf.

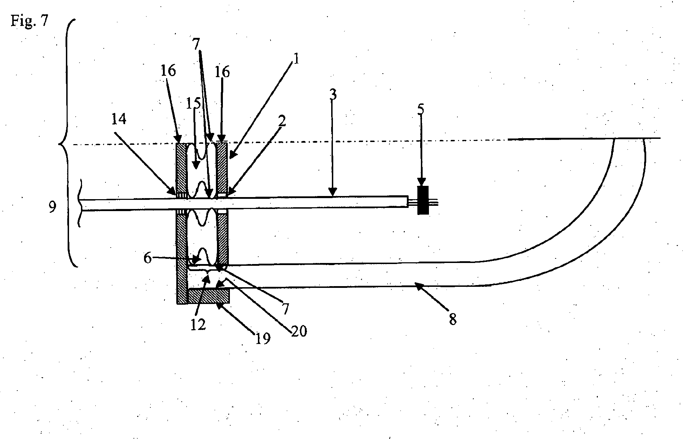

Die Fig. 7 zeigt eine Ausführungsform der Vorrichtung, bei der die Dichtungsplatte 1 mit ihrer zylindrischen Umfangsfläche, die umlaufende Rippen 7 und Nuten 6 aufweist, an der Innenwand der Kappe 8 anliegt, wobei die Dichtungsplatte 1 einen Rand 19 aufweist, dessen Innenfläche 20 an der Außenwand der Kappe 8 anliegt. Diese Innenfläche 20 ist in dem Abstand von der an der Innenwand der Kappe 8 anliegenden zylindrischen Umfangsfläche der Dichtungsplatte 1 angeordnet, in dem die zylindrische Umfangsfläche und die Innenwand der Kappe 8 kraftschlüssig jeweils an gegenüberliegenden Wänden der Kappe 8 anliegen.

## Patentansprüche

1. Vorrichtung zum wasserdichten Abdecken der Endbereiche von mindestens zwei isolierten elektrischen Leitern (3), die an ihren abisolierten Enden elektrisch leitend miteinander verbunden sind, welche eine mit einer Öffnung versehene Kappe (8) aufweist, in welcher die miteinander verbundenen Enden der Leiter (3) im Montagezustand angeordnet sind, und welche im Montagezustand durch eine in der Öffnung angeordnete Dichtungsplatte (1) feuchtigkeitsdicht verschlossen ist, in der einzelne Durchbrechungen (2), die voneinander beabstandet sind, zum Hindurchführen von isolierten elektrischen Leitern angebracht sind, **dadurch gekennzeichnet,**
- **daß** die Kappe (8) genau eine Öffnung aufweist,
- **daß** die Durchbrechungen (2) im Ausgangszustand durch Lamellen (14) verschlossen sind und
- **daß** in jeder Durchbrechung (2), durch welche im Montagezustand ein isolierter Leiter (3) hindurchgeführt ist, die zugehörige Lamelle (14), welche beim Hindurchführen des Leiters durch die Durchbrechung von demselben durchstoßen worden ist, elastisch an dem isolierten Leiter (3) anliegt.

2. Vorrichtung nach Anspruch 1, **dadurch gekennzeichnet, daß** jede Durchbrechung (2) auf ihrer inneren Oberfläche umlaufende Rippen (7) aufweist, die im Montagezustand elastisch an dem isolierten Leiter (3) anliegen, welcher durch eine Durchbrechung hindurchgeführt ist.

3. Vorrichtung nach Anspruch 1 oder 2, **dadurch gekennzeichnet, daß** die Dichtungsplatte (1) eine Dichtschicht (15) mit einer umlaufende Rippen (7) aufweisenden zylindrischen Umfangsfläche hat, die im Montagezustand an der Innenwand der Kappe (8) anliegt.

4. Vorrichtung nach Anspruch 1 oder 2, **dadurch gekennzeichnet, daß** die Dichtungsplatte (1) vorstehende Ansätze (17) aufweist, die im Montagezustand in Rastausnehmungen (18) der Kappe (8) angeordnet sind.

5. Verfahren zur Herstellung einer Vorrichtung zum feuchtigkeitsdichten Abdecken der Endbereiche von mindestens zwei isolierten elektrischen Leitern nach Anspruch 1, **dadurch gekennzeichnet,**
- **daß** die isolierten Leiter (3) durch voneinander beabstandete Durchbrechungen (2) einer Dichtungsplatte (1) hindurchgeführt werden, welche durch eine Lamelle (14) verschlossen sind, die jeweils vom Leiter (3) durchstoßen wird, und
- **daß** die elektrisch miteinander verbundenen Enden der aus der Dichtungsplatte (1) herausragenden Leiter so weit in in eine genau eine Öffnung aufweisende Kappe (8) eingebracht werden, bis die Dichtungsplatte (1) die Öffnung der Kappe (8) feuchtigkeitsdicht verschließt.

## Claims

1. A device for waterproof surrounding the areas at the ends of at least two insulated electrical conductors (3), which are electrically connected to each other at their bared ends, which comprises a cap (8) with an opening within which the conductors (3) which are connected at their ends are positioned in mounting position, and which is closed waterproof in mounting position by a sealing plate (1) which is placed in the opening, which has individual perforations (2), which are separated from each other for the passing through of insulated electrical conductors, **characterized in**
- **that** the cap (8) has exactly one opening,
- **that** the perforations (2) are closed by laminas (14) in the initial status and
- **that** within each perforation (2) through which in mounting position an insulated conductor (3) is passed through, the respective lamina (14), which is pierced by the conductor at its passing through through the perforation, abuts elastically to the insulated conductor (3).

2. A device according to claim 1, **characterized in that** each perforation (2) at its inner surface is provided with annular ribs (7), which in mounting position abut elastically to the insulated conductor (3) which is passed through through the perforation.

3. A device according to claim 1 or 2, **characterized in that** the sealing plate (1) has a sealing layer (15) having annular ribs (7) at its cylindrical outer surface which in mounting position abut to the inner wall of the cap (8).

4. A device according to claim 1 or 2, **characterized in that** the sealing plate (1) comprises protruding lugs (17), which in mounting position penetrate into locking recesses (18) of the cap (8).

5. Method for the production of a device for the waterproof surrounding of the ends of at least two insulated electric conductors according to claim 1, **characterized in**
- **that** the insulated conductors (3) are passed through through individual perforations (2) of a sealing plate (1), which are separated from each other and closed by laminas (14) which are pierced by a conductor (3) respectively, and
- **that** the electrically connected ends of the conductors which protrude from the sealing plate (1) are mounted into exactly one opening of the cap (8) such that the sealing plate (1) closes the opening of the cap (8) in a waterproof manner.

## Revendications

1. Dispositif pour couvrir de manière étanche à l'eau les régions d'extrémité d'au moins deux conducteurs électriques isolés (3) qui sont connectées l'une à l'autre au niveau de leurs extrémités dénudées de manière électriquement conductrice, lequel présente un embout (8) pourvu d'une ouverture dans laquelle les extrémités connectées l'une à l'autre des conducteurs (3) sont disposées dans l'état de montage, et lequel est fermé de manière étanche à l'humidité dans l'état de montage par une plaque d'étanchéité (1) disposée dans l'ouverture, dans laquelle sont pratiquées des perforations individuelles (2) espacées les unes des autres pour le guidage de conducteurs électriques isolés, **caractérisé en ce**
- **que** l'embout (8) présente exactement une ouverture,
- **que** les perforations (2) sont fermées dans l'état initial par des lamelles (14) et
- **que** dans chaque perforation (2) à travers laquelle, dans l'état de montage, est guidé un conducteur isolé (3), la lamelle associée (14), qui a été percée par le conducteur lors de son passage à travers la perforation, s'applique élastiquement contre le conducteur isolé (3).

2. Dispositif selon la revendication 1, **caractérisé en ce que** chaque perforation (2) présente, sur sa surface intérieure, des nervures périphériques (7) qui, dans l'état de montage, s'appliquent élastiquement contre le conducteur isolé (3) qui est guidé à travers une perforation.

3. Dispositif selon la revendication 1 ou 2, **caractérisé en ce que** la plaque d'étanchéité (1) a une couche d'étanchéité (15) avec une surface périphérique cylindrique présentant des nervures périphériques (7), laquelle surface périphérique s'applique, dans l'état de montage, contre la paroi intérieure de l'embout (8).

4. Dispositif selon la revendication 1 ou 2, **caractérisé en ce que** la plaque d'étanchéité (1) présente des projections saillantes (17) qui sont disposées dans l'état de montage dans des évidements d'encliquetage (18) de l'embout (8).

5. Procédé de fabrication d'un dispositif pour couvrir de manière étanche à l'humidité les régions d'extrémité d'au moins deux conducteurs électriques isolés selon la revendication 1, **caractérisé en ce**
- **que** les conducteurs isolés (3) sont guidés à travers des perforations (2) espacées les unes des autres d'une plaque d'étanchéité (1), lesquelles perforations sont fermées par une lamelle (14) qui est à chaque fois percée par le conducteur (3), et
- **que** les extrémités connectées électriquement l'une à l'autre des conducteurs sortant de la plaque d'étanchéité (1) sont introduites dans un embout (8) présentant exactement une ouverture jusqu'à ce que la plaque d'étanchéité (1) ferme l'ouverture de l'embout (8) de manière étanche à l'humidité.
